# EUROPEAN PATENT SPECIFICATION

(11) **EP 1 561 535 B1**
(45) Date of publication and mention of the grant of the patent: **04.01.2012**
(21) Application number: 04002673.4
(22) Date of filing: 06.02.2004
(51) Int. Cl.: B23D 77/00

(54) **Cutting tool and method for using said cutting tool**
Schneidwerkzeug und Verfahren zu dessen Benutzung
Outil de coupe et procédé pour l'utilisation dudit outil

(43) Date of publication of application: 10.08.2005
(73) Proprietor: Volvo Car Corporation, 405 31 Göteborg (SE)
(72) Inventor: Ojanperä, Ari, 541 56 Skövde Sverige (SE); Paananen, Vesa, 541 57 Skövde Sverige (SE)
(74) Representative: Mossmark, Anders Lennart

(56) References cited:
- EP-A- 0 545 826
- DE-A- 4 128 028
- FR-A- 1 287 928
- GB-A- 847 197
- GB-A- 2 007 552
- US-A- 4 231 693
- US-A- 5 921 728

## Description

### TECHNICAL FIELD

The invention relates to a cutting tool adapted to finish the internal surface of an existing through hole and a method for using such a tool.

### BACKGROUND ART

In a wide variety of manufacturing and repair or reconditioning processes, it is necessary to accurately cut a hole or bore to a predetermined inner diameter. For example, such a cutting operation is performed in some of the various methods which have heretofore been developed for the manufacture or rebuilding of internal combustion engine valve guides. During manufacture of an internal combustion engine the valve guides are integral with the engine block in which they are machined by performing an initial drilling or boring process followed by a finishing process. Alternatively, the valve guides of an internal combustion engine will wear after extensive use presenting excessive clearance between the valve guide and the valve stem. This excessive clearance may have an adverse effect on valve train operation and also increases undesirable emissions from the internal combustion engine, requiring lining or relining of the worn valve guides with generally cylindrical inserts. In a typical rebuilding process, a worn valve guide is bored out to receive the insert which is press fit or forced into the bored out valve guide passageway. The insert is finish reamed so that the internal diameter is accurately cut and dimensioned with respect to the stem of the valve which reciprocates within the rebuilt valve guide.

Reamers use for the above purposes are usually fabricated in a plurality of graduated, standard diameter sizes to accommodate the different sizes of valve guides. The reamers each include a plurality of flutes which define cutting blades. The flutes may be straight or spiral cut. Typically, a spiral flute reamer is used since it provides a better finish and a smoother cutting of the insert passageway than a straight cut reamer. Conventional reamer blades each include a rake face, a cutting edge, a land having a margin and a relief, and a trailing portion. The land may be circular or convex and is typically relieved to avoid interference and rubbing with the work piece. Such reamers may be manufactured from high speed steel and a fluting cutter is employed to cut the flutes into the reamer blank. Reamers of this type may also include two steps, such as a pilot reamer and a finishing reamer. Further, the reamer portion may be back tapered to prevent binding of the reamer within the bore which is being enlarged and finished. Typical examples of such reamers may be found in US 3,802,055, which discloses a cutting tool according to the preamble of claim 1, and US 4,231,693.

However, problems will often arise when a manufacturing process sets a high standard with respect to geometrical tolerances and tight dimension tolerances. One aim of the invention is to provide a finishing tool or tool concept that gives holes within all tolerance demands. This can be achieved in one pass in a rough drilled, pre-cast or pre-sintered blank by providing a tool having optimized geometry and lands. By optimizing the geometry it is possible to achieve larger cutting depths, a straighter hole, and to minimize the risk for unmachined spots in the hole after final machining.

A further problem is to avoid heat transportation into the work piece. This problem can be solved by optimizing the geometry of the tool and by providing the tool with coolant channels for cooling and performing chip removal from all cutting locations.

### DISCLOSURE OF INVENTION

It is therefore an object of the present invention to provide a cutting tool and a method that solves the above problems. This is achieved by a cutting tool, according to claim 1, and a method for machining a hole using said tool, according to claim 13.

According to a first embodiment the invention relates to a cutting tool adapted to finish the internal surface of a through hole, said tool comprising a member having a tip, a back tapered body section, said body section having a plurality of flutes, said flutes defining a plurality of cutting blades, and each of said cutting blades including a first section having a first diameter and extending rearwardly from said tip, and at least one further section having a diameter exceeding said first diameter and extending rearwardly of said first section. The first section and each subsequent section are separated by a circumferential step. Each section of the respective cutting blades has a margin with a predetermined width in the circumferential direction of the tool and the margin of the first section is wider than the margin of each subsequent section.

According to a preferred embodiment the tool comprises a-first and second section, although additional sections are possible. The cutting or finishing tool according to the invention is a multi cut stepped tool in solid carbide and has at least two diameters. In a preferred embodiment the first section has the smallest diameter and is exactly equal to diameter of the pilot tool. The second section has the largest diameter, which is the same as the desired final diameter of the hole. The tool tolerances are set to achieve a final hole diameter within a predetermined tolerance. For a valve guide reamer having a first and second step only, the difference between the corresponding first and second diameters may be 0,15-0,4 mm. The length of the first section, from its cutting edge to the cutting edge on the second step, may be 0,8 to 1 times the diameter of the first section.

Margin width and back taper is optimized to give good guidance and support. This ensures a stable and robust process. The term land is defined as the part of the cutting blade located behind the cutting edge, in the direction of rotation of the tool. The land is divided into a margin and a heel. Here the circumferential width of the margin refers to the width of that part of the land that is in contact with the surface of the hole axially rearwards of the cutting edges to guide and support the tool. The part of the margin positioned axially behind the cutting edge of the tool is provided with a taper, or back taper in order to reduce the contact surface and thus friction.

The diameter of the first step is chosen to find the optimum distribution of the total working allowance and at the same time give best cutting condition for the final cut. A first step, having a smaller diameter, is a semifinishing and guiding part that needs wide margins and low back taper in order to give best support. A second step, having a larger diameter, is a final cutting part of the tool that has to be optimized to reach capability in final diameter, surface finish, as well as roundness and straightness.

This optimization can be achieved by means of relatively wide margins on the smaller diameter first section and relatively narrow margins on the larger diameter second section. For the first section, the margin width may be selected within the range 4-8% of the corresponding diameter. The margin width of the second section may be approximately 35-60% of the margin width of the first section.

Similarly, the back taper of the second section is 40-60% of the back taper of the first section. For example, a valve guide reamer of this type may have a first section with a back taper of 0,04-0,08 mm/100 mm and a second section with a back taper of 0,02-0,04 mm/100 mm.

Coolant flow trough the tool and the design of coolant outlet from the tool is another issue where special care was taken. Especially coolant outlet has big affect on the performance and reliability of the machining operation. The coolant has two main tasks, lubrication and chip transport. Of course there is a cooling effect as well. By flowing coolant radial out from the center of the tool, through narrow slots the coolant flow goes in two directions, forward and backwards. Chips from the first step will be flushed forwards while chips from the second step mainly will be flushed backwards. The design of coolant outlet ensure at the same time perfect lubrication all along the guiding land area.

According to one embodiment of the invention the tool is provided with axially extending coolant channel having radial coolant outlets adjacent at least one of the cutting edges of said cutting blades. The radial coolant outlets may preferably, but not necessarily, be positioned adjacent the step between the pilot section and the finishing section

According to one embodiment of the invention the radial coolant outlets may be arranged to evacuate coolant and cut chips from the first section towards the tip of the tool. The radial coolant outlets may also be arranged to evacuate coolant and cut chips from the second section rearwards from the tip of the tool

The invention further relates to a method of machining the internal surface of a through hole using a cutting tool according to claim 1, having a first section with a first diameter and extending rearwardly from said tip, and at least one further section with a diameter exceeding said first diameter and extending rearwardly of said first section and adapted to extend at least the major portion of the length of the hole, and a pilot tool having a diameter equal to the first section of the cutting tool, wherein the method comprises the steps of:
- machining a first portion of the hole to a predetermined depth using the pilot tool, which depth is equal to or larger than the length of said first section of the cutting tool,
- inserting the first section of the cutting tool into the first portion of the hole for alignment therewith,
- rotating the cutting tool to machine the hole to a predetermined dimension and tolerance.

The first portion of the hole may be machined to a depth corresponding to 1 to 2 times the diameter of the first section of the cutting tool, preferably to a depth corresponding to 1,2 times the said diameter. On one hand the depth must exceed the said diameter, but on the other hand it is not desirable to machine the hole unnecessarily as this entails additional wear on the pilot tool and increases the cycle time for the process.

One basic idea behind the new tool is that there must be enough material to remove in order to create a well-defined chip. The allowance has significant affect on the heat in both tool and work piece. Heat transportation into the work piece should be avoided. With well-defined chips the heat will remain in the chips and will be transported out from the tool and work piece by the coolant flow. Heat is a definite cause of tool wear and must be avoided in order to reach long tool life. A tool able to take a deeper cut is more forgiving to preceding machining processes. Blank or premachining does not have to be as accurate as if the finishing tool is very sensitive regarding working allowance. This may be achieved by means of a tool guide, such as an initial or a pilot section, to ensure an aligned hole position and a secure entrance of the finishing section of the tool. For this reason a pilot hole is made in the work piece by a separate pilot tool or reamer. In the text, the term "pilot tool" refers to the tool performing the first machining operation, while the term "pilot section" refers to the first step or section on the stepped cutting or finishing tool according to the invention.

The use of a pilot tool or reamer as such is considered to be background art and is not a part of the innovation. The pilot hole has the same function as a guide bush and the pilot tool is a relatively short rigid tool in solid carbide. An appropriate depth x₁ of the pilot hole is related to the diameter d of the first, or pilot section of the finishing tool. The final result depends on the dimension of the pilot hole. The depth x₁ of the hole may preferably be in the interval d < x₁ < 2d times the diameter, where 1,2 times the diameter is the most preferable depth. The pilot tool and the finishing tool should be given the same tool change interval in order to maintain the same cutting conditions over time.

As stated above, the cutting or finishing tool according to the invention is a multi cut stepped tool in solid carbide and has at least two diameters. The first section has the smallest diameter and is exactly equal to diameter of the pilot tool. The largest diameter is the same as the desired final diameter of the hole. The tool tolerances are set to achieve a final hole diameter within a predetermined tolerance. The length of the step for the smallest diameter must be at least equal to, but preferably shorter than the depth of the pilot hole, preferably 0,8 - 1 times the diameter. One reason for this is that the cutting edges of the small diameter pilot section should not begin to cut before the second step has begun to cut. Initially, the main function of the pilot section is to guide and support the subsequent or final cuts in the bigger or finishing diameters, respectively. Once the pilot section has begun to cut, producing a semi finishing cut, it continues to act as a guide for the second, or finishing section, leading the tool through the hole.

The arrangement is preferably, but not necessarily, provided with an axial coolant channel in the finishing tool. The coolant may be supplied from the tool holder through a central, axial channel in the tool. The axial channel may extend through the tip of the tool, but if this is the case it is sealed by a plug fixed flush with the axial end surface of the finishing reamer. The coolant may exit through at least one axial slot machined in a respective flute of the tool. In a preferred embodiment, an axial slot can be milled at or adjacent the bottom of each flute into the coolant channel. The cutting tool is preferably, but not necessarily, positioned so that its rotational axis coincides with a plane through or adjacent a notch or step between two sections, at right angles to the axis of the tool. This can be done by means of a slot cutter placed in a substantially radial plane relative to the axis of the tool. The slot mill may have a diameter approximately twice the length of the pilot section and a thickness of 1,5-3% of the diameter of the finishing section. The slot mill is preferably fed radially into the tool through the bottom surface of a flute, machining an axial slot measuring approximately 1-1,5 mm in the axial direction of the tool, along the inner surface of the coolant channel.

Depending on factors such as the dimensions of the tool and the coolant channel, the number of flutes, the depth of cut, etc. the dimensions of the slots is selected accordingly.

This arrangement creates an advantageous coolant distribution during a machining operation. The effect of the narrow slots is to create a thin arc-shaped jet of coolant. This jet is directed not only in the radial direction of the tool, but also in a forward and rearward direction, relative to the axis of the tool. In this way it is possible to cool the cutting edges of both steps with simultaneous removal of cut chips from both areas to be machined.

Coolant supplied through the coolant channel to the slots can be divided into several portions. A first portion is directed radially outwards from the tool, to cool the cutting edges of the finishing section. A second portion of coolant is directed rearwards relative to the tool, to transport cut chips from the finishing section through the flutes of the tool and out of the machined hole. A third portion of coolant is directed forwards relative to the tool, to cool the cutting edges of the pilot section and to transport cut chips from the pilot section out of the hole to be machined. Said first portion of coolant may flow forwards rearwards or both. By adjusting the flow rate and pressure of the coolant in the coolant channel it is possible to provide sufficient cooling for both cutting locations, as well as a clog free removal of chips. By using this arrangement it is not necessary to remove cut chips from both locations backwards, relative to the direction of feed, through the flutes of the tool.

The tool according to the invention has an outer appearance similar to known multi-cut step-reamers. However, there are several differences between the known tools and the invention, as summarized below.

First, it has varying widths of the margins, and each diameter for each respective step has its own optimized margin width. Second, the ratio between small and large diameter is selected within specific ranges. Third, designed coolant channels and outlet openings are provided for enhanced cooling of the tool and work piece. Finally, suitable surface coatings may be provided to give improved wear and heat resistance, lower friction and other such properties. This gives a reamer with reliable function, longer tool life, improved chip transport and improved hole quality with respect to tolerance and surface finish. An appropriate radial cutting depth is approximately 50 % higher than the recommended cutting depth for known reaming tools. Such a large cutting depth is preferred since the tolerance of the position of pre-cast or premachined hole can be wider. When the allowance is too small or the position of the hole is out of tolerance there is a risk for unmachined spots in the hole after final machining, which risk can now be minimised. The cutting depth may differ from side to side in the hole but the tool design with a solid carbide body in combination with optimized geometry and lands is well equipped to handle possible differences in cutting depths. Bigger cutting depth gives an improved chip formation, in this case short chips that are easier to transport. The tool also gives a straighter hole, thanks to relatively wide margins on the small diameter pilot section.

### BRIEF DESCRIPTION OF DRAWINGS

In the following text, the invention will be described in detail with reference to the attached drawings. These drawings are used for illustration only and do not in any way limit the scope of the invention. In the drawings:
- Figure 1: shows a pilot reamer used for machining a valve guide;
- Figure 2: shows a finishing reamer used for machining a valve guide;
- Figure 3: shows an enlarged view of the cutting section for the finishing reamer of Figure 2;
- Figure 4: shows an end view of the reamer in Figure 3;
- Figure 5: shows a schematic cross-section through the pilot and the finishing sections 3, 4 of the finishing tool;
- Figure 6A-B: show cross-sections through a cutting blade of the pilot section and the finishing section;
- Figure 7: shows an arrangement of a coolant channel in the finishing tool;
- Figure 8: shows a schematic illustration of the coolant distribution during a machining operation.

### MODES FOR CARRYING OUT THE INVENTION

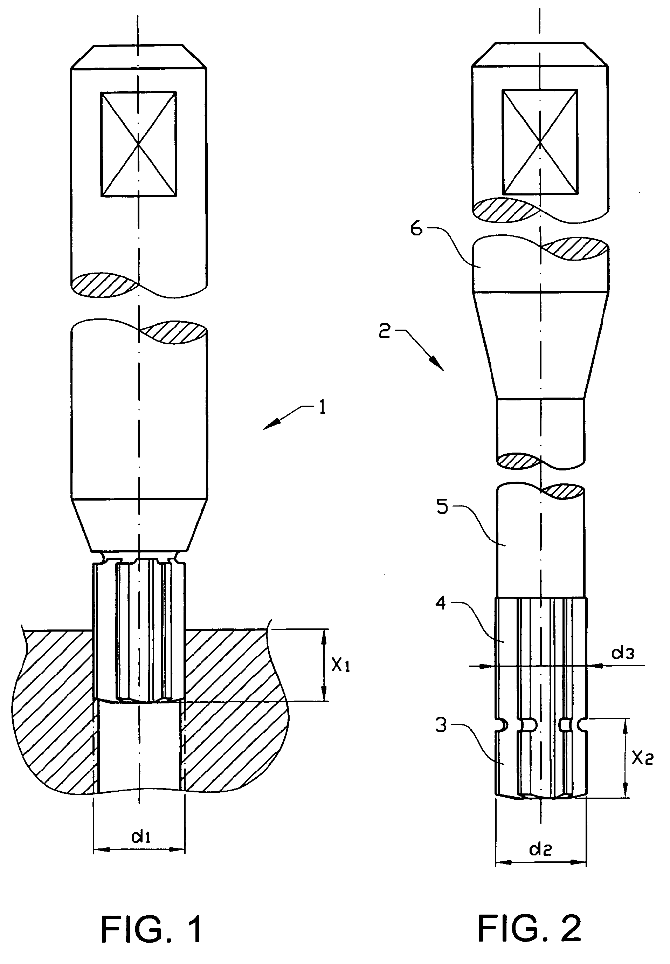

Figure 1 shows a pilot tool or pilot reamer 1 used for machining a valve guide in the cylinder head of an internal combustion engine. This relatively short pilot reamer 1 has a diameter d₁ and is used for pre-machining a pilot hole to a predetermined depth x₁ in an existing through hole in the cylinder head. The relatively short length and high stiffness of the pilot reamer 1 makes it possible to perform this first machining step with a relatively high accuracy, with respect to both axial alignment and roundness of the pilot hole.

The depth x₁ of the pilot hole is equal or larger than the length x₂ of a first step of a cutting tool or finishing reamer 2, shown in Figure 2. The finishing reamer 2 comprises a first section, hereafter termed pilot section 3, a second section, hereafter termed finishing section 4, a shaft section 5 and a holder section 6. The diameter d₂ of the pilot section 3 is substantially identical to the diameter d₁ of the pilot reamer 1. The length x₂ of the pilot section 3 is equal to or less than the depth x₁ of the pilot hole, which depth may be chosen in the interval d₁ ≤ x₁ ≤ 1,3 d₁. According to a preferred embodiment the depth x1 is about 1,2 d₁. The diameter d₃ of the finishing section 4 is chosen to be 0,15-0,4 mm, preferably 0,2-0,35 mm greater than the diameter of the pilot section d₂. Also, the back taper of the pilot section 3 is chosen in the interval 0,04-0,08 mm/100 mm, while the back taper of the finishing section 4 is chosen in the interval 0,02-0,04 mm/100 mm. Dependent on the material to be machined, and in some cases on the configuration of the workpiece, a tool with a predetermined back taper is chosen.

The shaft section 5 has a diameter that is slightly smaller than that of the finishing section 4 and a length sufficient to allow machining of the entire length of any valve guide in the cylinder head. Due to the extended length of its shaft section the finishing reamer 2 uses the pilot section 3 as a guide during the initial stage of the final machining operation of the valve guide. This is achieved by allowing the pilot section 3 to enter the hole, stationary or under rotation of the finishing reamer 2, whereby no machining takes place until the finishing section 4 reaches the edge of the hole. In this way the tool is first guided into the hole to achieve axial alignment before the cutting operation starts. As the finishing reamer 2 is fed into the hole, first the finishing section 4 and then the pilot section 3 will begin to cut. This machining operation is then continued until the finishing section 4 exits the rear end of the valve guide on the opposite side of the cylinder head.

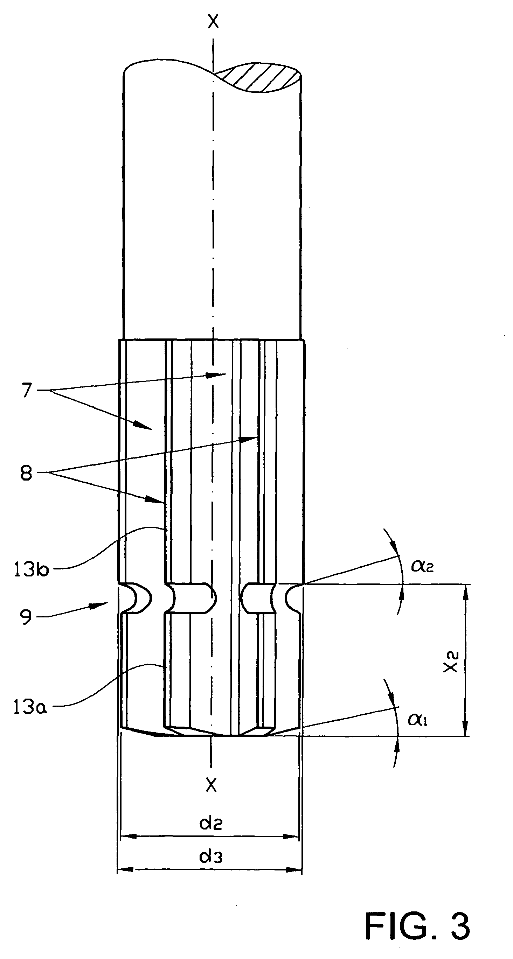

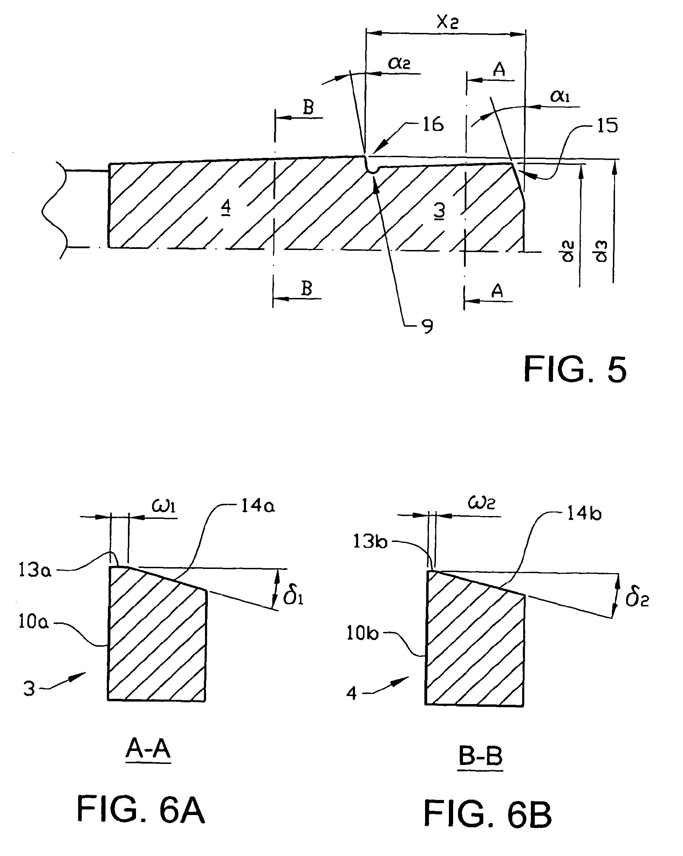

The finishing reamer 2 in accordance with the present invention includes a cutting section comprising said pilot and finishing sections 3, 4, as shown enlarged in Figure 3. The cutting section has a plurality of flutes 7 with each flute defining a cutting blade 8. The cutting blades of the pilot and finishing sections 3, 4 are separated by a circumferential, radial notch 9 cut into each such blade 8. In addition, the cutting blades of the pilot and finishing sections 3, 4 have the same chamfer angle α₁, α₂ for the cutting edges. The distance x₁, indicating the depth of the pilot hole, is measured from the front end surface of the finishing reamer 2 to the axial position where the cutting edges of the finishing section reaches their maximum diameter d₃. The above is also described in more detail in connection with Figure 5.

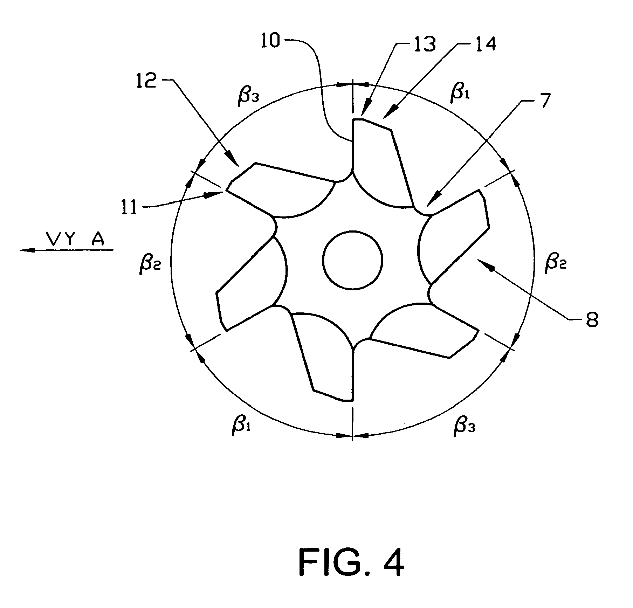

Figure 4 shows an end view of the reamer in Figure 3. Each blade 8 includes a rake face 10, a cutting edge 11 and a land 12, divided into a radially outer clearance face or margin 13 and a heel 14. Alternatively the margin along a portion of the finishing section 4 may be formed with a radial relief opening through the rake face and dimensioned so as not to contact the work piece during reamer operation. The width of said margin is often termed land width.

The current embodiment is shown with six cutting blades 8 unequally divided around the periphery of the tool. In this particular case three subsequent cutting blades on one side of a diametral plane through the axis X of the reamer 2 are placed at unequal and increasing angles β₁, β₂, β₃ to each other. These angles are preferably, but not necessarily; β₁ = 58°, β₂ = 60° and β₃ = 62°. This pattern is repeated for the remaining three cutting blades. Alternative embodiments may of course comprise more or fewer cutting blades, positioned with an equal or unequal division.

Figure 5 shows a schematic cross-section through the pilot and the finishing sections 3, 4 of the finishing reamer 2. The chamfer angles α₁ and α₂ of the cutting edges 15, 16 of both the pilot and the finishing sections 3, 4 are identical and are preferably, but not necessarily, selected to an angle of 15°. Dependent on the material to be machined, and in some cases on the configuration of the workpiece, the chamfer angle may be selected within the range 0-45°. Hence the distance x₁ is measured from the front end surface of the finishing reamer 2 to the axial position where the line indicating the chamfer angle for the cutting edge 16 of the finishing section intersects the maximum diameter d₃. The figure also shows an exaggerated illustration of the back taper of the margins of the pilot and finishing sections 3, 4. The difference in back taper between the pilot and finishing sections in this embodiment has been discussed above.

Figures 6A and 6B show cross-sections A-A and B-B through a cutting blade of the pilot section 3 and the finishing section 4 respectively. Each cross-section shows a rake face 10a, 10b, a margin 13a, 13b and a heel 14a, 14b. As can be seen from the Figures, the margin 13a of the pilot section 3 has a larger width w₁ than the corresponding width w₂ of the margin 13b of the finishing section 4. In this embodiment the relationship between the widths w₁:w₂ is approximately 2:1, although this relationship may be selected within the range 1,7:1 to 3:1. This particular finishing tool has a pilot section margin width w₁ of 0,35 mm. The relief angles δ₁ and δ₂ for the respective cutting blades can be the same for both the pilot and the finishing section and may be selected within the range 5-15°. This angle is dependent on the diameter of the tool and has little effect on the function of the tool.

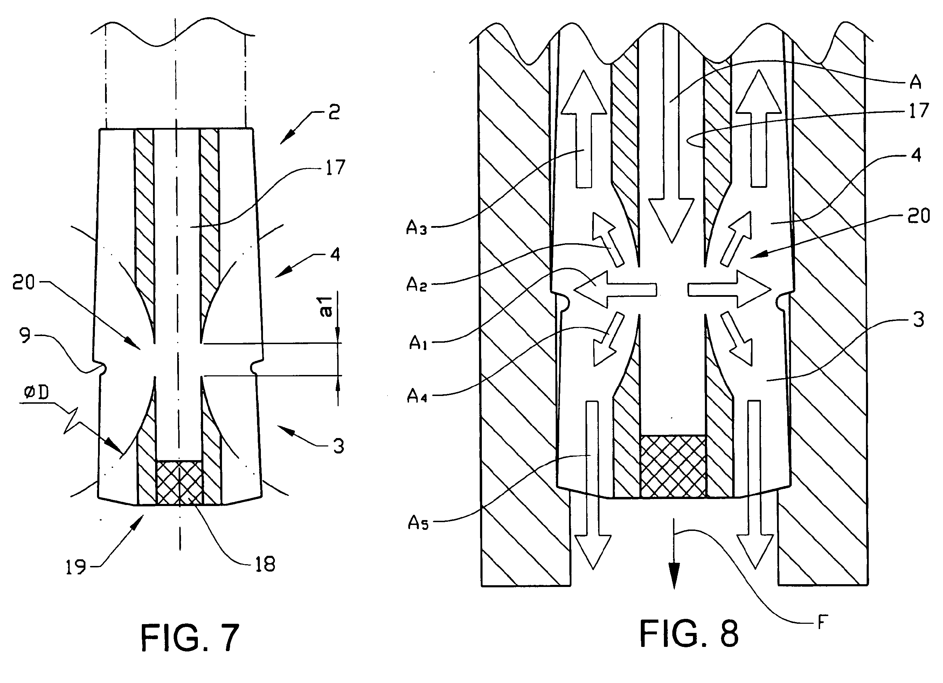

Figure 7 shows the arrangement of a coolant channel in the finishing tool. The coolant is supplied from the tool holder (not shown) through a central, axial channel 17 in the tool. The axial channel 17 extends through the tip of the tool, but is sealed by a plug 18 fixed flush with the axial end surface 19 of the finishing reamer 2. The coolant exits through a number of axial slots 20 machined in the flutes 7 of the tool. In this embodiment one axial slot 20 per flute was milled through the bottom of each flute 7 into the coolant channel. The preferably, but not necessarily, positioned so that its rotational axis coincides with a plane through or adjacent the notch 9, at right angles to the axis of the tool. This can be done by means of a slot cutter placed in a substantially radial plane relative to the axis of the tool. In the current embodiment a slot mill having a diameter D approximately twice the length of the pilot section 3 and a thickness of 0,12 mm. This thickness is preferably 1,5-3% of the diameter d₃ of the finishing section. The slot mill was fed radially into the tool through the bottom surface of a flute, machining an axial slot 20 measuring a distance a₁ of approximately 1-1,5 mm in the axial direction of the tool, along the inner surface of the coolant channel 17.

Depending on factors such as the dimensions of the tool and the coolant channel, the number of flutes, the depth of cut, etc. the dimensions of the slots is selected accordingly.

Figure 8 shows a schematic illustration of the coolant distribution during a machining operation. As can be seen from the figure, the effect of the narrow slots is to create a thin arc-shaped jet of coolant. This jet is directed not only in the radial direction of the tool, but also in a forward and rearward direction, relative to the axis of the tool. The direction of feed of the tool during machining is indicated by the arrow F.

Coolant A is supplied through the coolant channel 17 to the slots 20. A first portion A₁ of coolant is directed radially outwards from the rotary axis of the tool, to cool the cutting edges of the finishing section 4. A second portion A₂ of coolant is directed rearwards relative to the tool, to transport cut chips from the finishing section 4 through the flutes of the tool and out of the machined hole as indicated by the arrow A₃. A third portion A₄ of coolant is directed forwards relative to the tool, to cool the cutting edges of the pilot section 3 and to transport cut chips from the pilot section 3 out of the hole to be machined as indicated by the arrow A₅. The first portion A₁ will be drained axially forwards and rearwards. By adjusting the flow rate and pressure of the coolant in the coolant channel 17 it is possible to provide sufficient cooling for both cutting locations, as well as a clog free removal of chips.

The invention is not limited to the embodiments described above and may be varied freely within the scope of the appended claims.

## Claims

1. A cutting tool (2) adapted to finish the internal surface of a through hole, said tool (2) comprising member having a tip, a back tapered body section (3, 4) said body section (3, 4) having a plurality of flutes (7), said flutes defining a plurality of cutting blades (8), each of said cutting blades (8) including a first section having a first diameter (d₂) and extending rearwardly from said tip and at least one further section having a diameter (d₃) exceeding said first diameter (d₂) and extending rearwardly of said first section, **characterized in that** the first section and each subsequent section are separated by a circumferential step (9), that each section of the respective cutting blades (8) has a margin (13) with a predetermined width (ω), in the circumferential direction of the tool (2), and that the margin (13) of the first section is wider than the margin (13) of each subsequent section.

2. Cutting tool according to claim 1, **characterized in that** the tool (2) comprises a first pilot section (3) and a second finishing section (4).

3. Cutting tool according to claim 2, **characterized in that** the width of the margin (ω) is 4-8 % of the diameter of the respective section.

4. Cutting tool according to claim 2, **characterized in that** the width (ω₂) of the margin (13) of the second section (4) is 35-60 % of the width (ω₁) of the margin (13) of the first section (3).

5. Cutting tool according to claim 1, **characterized in that** the second section (4) has a back taper that is 40-60 % of the back taper of the first section (3).

6. Cutting tool according to claim 1, **characterized i n** that the diameter (d₃) of the second section (4) exceeds the diameter (d₂) of the first section (3) by 0,15 to 0,4 mm.

7. Cutting tool according to claim 1, **characterized in that** the first section (3) has a length (x₂) of 0,8 to 1 times the diameter (d₂) of the first section (3).

8. Cutting tool according to claim 1, **characterized in that** an axially extending coolant channel (17) having radial coolant outlets (20) adjacent at least one of the cutting edges of said cutting blades (8).

9. Cutting tool according to claim 8, **characterized in that** the radial coolant outlets (20) are positioned adjacent the step between the pilot section (3), and the finishing section (4).

10. Cutting tool according to claim 8, **characterized in that** each radial coolant outlet (20) comprises a radial slot extending axially in a flute (7).

11. Cutting tool according to claim 8, **characterized in that** each radial coolant outlet (20) is arranged to evacuate coolant and cut chips from the first section (3) towards the tip of the tool (2).

12. Cutting tool according to claim 8 or 11, **characterized in that** the radial coolant outlets (20) are arranged to evacuate coolant and cut chips from the second section (4) rearwards from the tip of the tool (2).

13. A method of machining the internal surface of a through hole using a cutting tool (2) according to claim 1, having a first section (3) with a first diameter (d₂) and extending rearwardly from said tip, and at least one further section (4) with a diameter (d₃) exceeding said first diameter (d₂) and extending rearwardly of said first section (3) and adapted to extend at least the major portion of the length of the hole, and a pilot tool (1) having a diameter (d₁) equal to the diameter (d₂) of the first section (3) of the cutting tool, wherein the method comprises the steps of:
• machining a first portion of the hole to a predetermined depth (x₁) using the pilot tool (1), which depth (x₁) is equal to or larger than the length (x₂) of said first section (3) of the cutting tool (2),
• inserting the first section (3) of the cutting tool (2) into the first portion of the hole for alignment therewith,
• rotating the cutting tool (2) to machine the hole to a predetermined dimension and tolerance.

14. The method according to claim 13, **characterized by** machining the first portion of the hole to a depth (x₁) corresponding to 1 to 1,3 times the diameter (d₂) of the first section (3) of the cutting tool (2).

15. The method according to claim 14, **characterized by** machining the first portion of the hole to a depth (x₁), corresponding to 1,2 times the diameter (d₂) of the first section (3) of the cutting tool (2).

## Patentansprüche

1. Schneidwerkzeug (2), das dafür eingerichtet ist, die Innenfläche einer Durchgangsbohrung fertig zu bearbeiten, wobei das Werkzeug (2) ein eine Spitze aufweisendes Element, einen nach hinten verjüngenden Körperabschnitt (3, 4) umfasst, wobei der Körperabschnitt (3, 4) eine Mehrheit von Nuten (7) aufweist, wobei die Nuten eine Mehrheit von Schneidklingen (8) definieren, wobei jede der Schneidklingen (8) einen ersten Abschnitt, der einen ersten Durchmesser (d₂) aufweist und sich nach hinten von der Spitze erstreckt, und mindestens einen weiteren Abschnitt, der einen den ersten Durchmesser (d₂) überschreitenden Durchmesser (d₃) aufweist und sich nach hinten von dem ersten Abschnitt erstreckt, umfasst,
**dadurch gekennzeichnet, dass** der erste Abschnitt und jeder nachfolgende Abschnitt durch eine Umfangsstufe (9) getrennt sind, dass jeder Abschnitt der jeweiligen Schneidklingen (8) einen Seitenrand (13) mit einer vorbestimmten Breite (W) in der Umfangsrichtung des Werkzeugs (2) aufweist, und dass der Seitenrand (13) des ersten Abschnitts breiter als der Seitenrand (13) jedes nachfolgenden Abschnitts ist.

2. Schneidwerkzeug nach Anspruch 1, **dadurch gekennzeichnet, dass** das Werkzeug (2) einen ersten Einführungsabschnitt (3) und einen zweiten Fertigungsabschnitt (4) umfasst.

3. Schneidwerkzeug nach Anspruch 2, **dadurch gekennzeichnet, dass** die Breite des Seitenrands (W) 4-8 % des Durchmessers des jeweiligen Abschnitts ist.

4. Schneidwerkzeug nach Anspruch 2, **dadurch gekennzeichnet, dass** die Breite (W₂) des Seitenrands (13) des zweiten Abschnitts (4) 35-60 % der Breite (W₁) des Seitenrands (13) des ersten Abschnitts (3) ist.

5. Schneidwerkzeug nach Anspruch 1, **dadurch gekennzeichnet, dass** der zweite Abschnitt (4) eine Durchmesserverjüngung aufweist, die 40-60 % der Durchmesserverjüngung des ersten Abschnitts (3) ist.

6. Schneidwerkzeug nach Anspruch 1, **dadurch gekennzeichnet, dass** der Durchmesser (d₃) des zweiten Abschnitts (4) den Durchmesser (d₂) des ersten Abschnitts (3) um 0,15 bis 0,4 mm überschreitet.

7. Schneidwerkzeug nach Anspruch 1, **dadurch gekennzeichnet, dass** der erste Abschnitt (3) eine Länge (X₂) von 0,8 bis 1 mal den Durchmesser (d₂) des ersten Abschnitts (3) aufweist.

8. Schneidwerkzeug nach Anspruch 1, **dadurch gekennzeichnet, dass** ein sich axial erstreckender Kühlmittelkanal (17) radiale Kühlmittelabflussöffnungen (20) neben mindestens einer der Schneidkanten der Schneidklingen (8) aufweist.

9. Schneidwerkzeug nach Anspruch 8, **dadurch gekennzeichnet, dass** die radialen Kühlmittelabflussöffnungen (20) neben der Stufe zwischen dem Einführungsabschnitt (3) und dem Fertigungsabschnitt (4) angeordnet sind.

10. Schneidwerkzeug nach Anspruch 8, **dadurch gekennzeichnet, dass** jede radiale Kühlmittelabflussöffnung (20) einen radialen Spalt umfasst, der sich axial in einer Nut (7) erstreckt.

11. Schneidwerkzeug nach Anspruch 8, **dadurch gekennzeichnet, dass** jede radiale Kühlmittelabflussöffnung (20) ausgeformt ist, Kühlmittel und Späne vom ersten Abschnitt (3) in Richtung der Spitze des Werkzeugs (2) zu entleeren.

12. Schneidwerkzeug nach Anspruch 8 oder 11, **dadurch gekennzeichnet, dass** die radialen Kühlmittelabflussöffnungen (20) ausgeformt sind, Kühlmittel und Späne vom zweiten Abschnitt (4) nach hinten von der Spitze des Werkzeugs (2) zu entleeren.

13. Verfahren zum Bearbeiten der Innenfläche einer Durchgangsbohrung unter Anwendung eines Schneidwerkzeugs (2) nach Anspruch 1, mit einem ersten Abschnitt (3), der einen ersten Durchmesser (d₂) aufweist und sich nach hinten von der Spitze erstreckt, und mindestens einem weiteren Abschnitt (4), der einen den ersten Durchmesser (d₂) überschreitenden Durchmesser (d₃) aufweist und sich nach hinten vom ersten Abschnitt (3) erstreckt und eingerichtet ist, mindestens den Hauptteil der Länge des Lochs auszuweiten, und einem Einführungswerkzeug (1) mit einem Durchmesser (d₁), der gleich dem Durchmesser (d₂) des ersten Abschnitts (3) des Schneidwerkzeugs ist, wobei das Verfahren folgende Schritte umfasst:
• Bearbeiten eines ersten Teils des Lochs zu einer vorbestimmten Tiefe (X₁) unter Anwendung des Einführungswerkzeugs (1), welche Tiefe (X₁) gleich oder größer als die Länge (X₃) des ersten Abschnitts (3) des Schneidwerkzeugs (2) ist,
• Einführen des ersten Abschnitts (3) des Schneidwerkzeugs (2) in den ersten Teil des Lochs zum Ausrichten damit,
• Drehen des Schneidwerkzeugs (2) zum Bearbeiten des Lochs zu einer vorbestimmten Abmessung und Toleranz.

14. Verfahren nach Anspruch 13, **gekennzeichnet durch** Bearbeitung des ersten Teils des Lochs zu einer Tiefe (X₁), die 1 bis 1,3 mal den Durchmesser (d₂) des ersten Abschnitts (3) des Schneidwerkzeugs (2) entspricht.

15. Verfahren nach Anspruch 14, **gekennzeichnet durch** Bearbeitung des ersten Teils des Lochs zu einer Tiefe (X₁), die 1,2 mal den Durchmesser (d₂) des ersten Abschnitts (3) des Schneidwerkzeugs (2) entspricht.

## Revendications

1. Outil de coupe (2) adapté pour finir la surface intérieure d'un trou traversant, ledit outil (2) comprenant un élément qui présente un bout, une section de corps qui présente une conicité arrière (3, 4), ladite section de corps (3, 4) présentant une pluralité de cannelures (7), lesdites cannelures définissant une pluralité de lames de coupe (8), et chacune desdites lames de coupe (8) comprenant une première section présentant un premier diamètre (d₂) et s'étendant vers l'arrière à partir dudit bout, et au moins une autre section présentant un diamètre (d₃) qui est supérieur audit premier diamètre (d₂) et s'étendant vers l'arrière de ladite première section, **caractérisé en ce que** la première section et chaque section suivante sont séparées par une marche circulaire (9), **en ce que** chaque section des lames de coupe respectives (8) présente un listel (13) avec une largeur prédéterminée (ω) dans la direction circonférentielle de l'outil (2), et en ce le listel (13) de la première section est plus large que le listel (13) de chaque section suivante.

2. Outil de coupe selon la revendication 1, **caractérisé en ce que** l'outil (2) comprend une première section pilote (3) et une seconde section finissage (4).

3. Outil de coupe selon la revendication 2, **caractérisé en ce que** la largeur (ω) du listel est comprise entre 4 % et 8 % du diamètre de la section respective.

4. Outil de coupe selon la revendication 2, **caractérisé en ce que** la largeur (ω₂) du listel (13) de la seconde section (4) est comprise entre 35 % et 60 % de la largeur (ω₁) du listel de la première section (3).

5. Outil de coupe selon la revendication 1, **caractérisé en ce que** la seconde section (4) présente une conicité arrière qui est comprise entre 40 % et 60 % de la conicité arrière de la première section (3).

6. Outil de coupe selon la revendication 1, **caractérisé en ce que** le diamètre (d₃) de la seconde section (4) dépasse le diamètre (d₂) de la première section (3) d'une valeur comprise entre 0,15 mm et 0,4 mm.

7. Outil de coupe selon la revendication 1, **caractérisé en ce que** la première section (3) présente une longueur (x₂) qui est comprise entre 0,8 fois et 1 fois le diamètre (d₂) de la première section (3).

8. Outil de coupe selon la revendication 1, **caractérisé en ce qu'**il comprend un canal de fluide de refroidissement (17) qui s'étend de manière axiale et qui présente des sorties de fluide de refroidissement radiales (20) adjacentes à l'un au moins des bords de coupe desdites lames de coupe (8).

9. Outil de coupe selon la revendication 8, **caractérisé en ce que** les sorties de fluide de refroidissement radiales (20) sont positionnées adjacentes à la marche entre la section pilote (3) et la section finissage (4).

10. Outil de coupe selon la revendication 8, **caractérisé en que** chaque sortie de fluide de refroidissement radiale (20) comprend une fente radiale qui s'étend de manière axiale dans une cannelure (7).

11. Outil de coupe selon la revendication 8, **caractérisé en que** chaque sortie de fluide de refroidissement radiale (20) est agencée de façon à évacuer le fluide de refroidissement et les copeaux coupés hors de la première section (3) vers le bout de l'outil (2).

12. Outil de coupe selon la revendication 8 ou la revendication 11, **caractérisé en que** les sorties de fluide de refroidissement radiales (20) sont agencées de façon à évacuer le fluide de refroidissement et les copeaux coupés hors de la seconde section (4) vers l'arrière à partir du bout de l'outil (2).

13. Procédé d'usinage de la surface intérieure d'un trou traversant à l'aide d'un outil de coupe (2) selon la revendication 1, présentant une première section (3) avec un premier diamètre (d₂) et s'étendant vers l'arrière à partir dudit bout, et au moins une autre section (4) avec un diamètre (d₃) supérieur audit premier diamètre (d₂) et s'étendant vers l'arrière de ladite première section (3) et adaptée pour s'étendre au moins sur la majeure partie de la longueur du trou, et un outil pilote (1) qui présente un diamètre (d₁) égal au diamètre (d₂) de la première section (3) de l'outil de coupe, dans lequel le procédé comprend les étapes consistant à :
- usiner une première partie du trou à une profondeur prédéterminée (x₁) à l'aide de l'outil pilote (1), laquelle profondeur (x₁) est égale ou supérieure à la longueur (x₂) de ladite première section (3) de l'outil de coupe (2) ;
- insérer la première section (3) de l'outil de coupe (2) dans la première partie du trou pour un alignement avec celle-ci ;
- faire tourner l'outil de coupe (2) de façon à usiner le trou à une dimension et à une tolérance prédéterminées.

14. Procédé selon la revendication 13, **caractérisé par** une étape consistant à usiner la première partie du trou à une profondeur (x₁) qui correspond à entre 1 fois et 1,3 fois le diamètre (d₂) de la première section (3) de l'outil de coupe (2).

15. Procédé selon la revendication 14, **caractérisé par** une étape consistant à usiner la première partie du trou à une profondeur (x₁) qui correspond à 1,2 fois le diamètre (d₂) de la première section (3) de l'outil de coupe (2).
